# DEMANDE DE BREVET EUROPEEN

(11) **EP 0 698 476 A1**
(43) Date de publication de la demande: **28.02.1996**
(21) Numéro de dépôt: 95410084.8
(22) Date de dépôt: 09.08.1995
(51) Int. Cl.: B29C 70/08, B29C 70/46

(54) **Procédé de fabrication d'une pièce plastique moulée revêtue par un gel-coat**

(30) Priorité: 10.08.1994 FR 9410054
(71) Demandeur: COMPOSITE COMPRESSION COMPANY, F-38000 Grenoble (FR)
(72) Inventeur: Willing, Bert, F-38000 Grenoble (FR); Talbotier, Gilles, F-38000 Grenobles (FR)
(74) Mandataire: Hecké, Gérard

(57) **Abrégé**

Procédé de fabrication d'une pièce plastique moulée dans un moule de compression à chaud, et recouverte par un revêtement de gel-coat, consistant:
- à utiliser un gel-coat à base de résine polyester insaturée, et à déposer le revêtement de gel-coat (16) sur une partie du moule (10) préalablement chauffé,
- puis, au bout d'un temps prédéterminé de semi-polymérisation, à déposer sur le revêtement de gel-coat (16) mi-polymérisé, une première feuille composite de moulage (18) LPMC, préalablement prédécoupée et comprenant un renfort de fibres de verre coupées et préimprégnées par une pâte d'imprégnation à base de résine thermodurcissable, notamment de polyester insaturé, ladite résine se trouvant, avant incorporation de la feuille (18), dans un état pâteux ayant une viscosité supérieure à 400000 Poises à une température ambiante, et renfermant différentes charges et agents d'épaississement adaptés à un mûrissement physique,
- puis, à fermer le moule (10) en procédant à une opération de compression à chaud à des pressions comprises entre 5 et 10 bars, au cours de laquelle intervient la fusion de la résine de la feuille composite (18), correspondant à l'état liquide pour une viscosité inférieure à 300 Poises au voisinage d'une température de fusion de 90°C,
- et, après la fin de phase de polymérisation s'effectuant au voisinage de 130°C pour les deux résines constitutives du revêtement de gel-coat (16) et de la feuille (18), à ouvrir le moule (10) pour démouler la pièce (24) moulée, peinte sur au moins une de ses faces.

## Description

L'invention est relative à un procédé de fabrication d'une pièce plastique moulée réalisée en un matériau à base d'une résine thermodurcissable et recouverte par un revêtement de gel-coat sur au moins une des faces.

La préparation et le moulage par compression à chaud des matériaux composite SMC polyesters est bien connu. Les SMC sont des composites comprenant un mat de fibres de verre coupées, préimprégnées de résine polyester thermodurcissable et pâteuse, auquel sont ajoutés des charges, des agents de stabilisation et de durcissement de la résine, des agents de compensation de retrait et de démoulage, ainsi que des pigments. Le SMC est présenté sous forme de feuille enroulée selon un rouleau, la matière à mouler étant protégée de part et d'autre par deux films de polyéthylène ou de Nylon que l'on enlève avant l'emploi. Le SMC est transformé à l'aide d'un moule de compression à matrice et poinçon, et la feuille n'est pas simplement déformée ou emboutie, mais véritablement moulée, avec écoulement de la résine de polyester fondue pour le remplissage du moule. Le moulage des composites par le procédé SMC nécessite des conditions sévères (température jusqu'à 170 °C, et des pressions dans le moule de 70 bars), d'où l'emploi de moules en acier traité très onéreux. La pression importante est nécessaire pour obtenir un bon fluage de la résine. Le mûrissement des composites SMC est de nature chimique, et il faut attendre quelques jours avant que la résine devienne pâteuse pour que l'opérateur d'une presse de moulage puisse manipuler une feuille de composite SMC. Après cette période, le composite SMC reste moulable pendant une quinzaine de jours.

On a déjà proposé d'intégrer le gel-coatage par projection électrostatique d'une poudre fine dans la production pièces composites en SMC. Mais sous l'influence de la température élevée et de la pression importante, le fluage du compound dans le moule provoque le déplacement et un frottement des fibres de verre , qui ont alors tendance d'arracher ou d'endommager une partie du gel-coat, qui n'est pas encore complètement polymérisé. Il en résulte une coloration dégradée ou imparfaite, laissant apparaître la couleur naturelle du compound à certains endroits.

Certains matériaux composites LPMC sont des matériaux SMC polymérisant à des températures et pressions moins élevées, et se transforment dans des moules métalliques, notamment en acier non traité. Le mûrissement des matériaux LPMC est physique, par lequel le mélange résine, durcisseur et catalyseur commence à durcir directement après sa production, en formant une structure de petits cristaux donnant une consistance pâteuse de grande stabilité durant une phase métastable. Le matériau LPMC est donc moulable dès sa production, et le reste pendant une période de trois mois environ.

La polymérisation d'un gel-coat intervient généralement à des températures élevées, notamment supérieures à 170°C, ce qui n'est pas compatible à priori avec le procédé LPMC demandant des températures inférieures, par exemple 130°C.

Dans le cas de fabrication de pièces sandwich renfermant un noyau de mousse entre deux peaux d'une matière rigide , il est difficile de trouver une mousse qui reste stable à des températures supérieures à 170°C.

Le gel-coatage en poudre dans un moule à compression semble à priori difficilement réalisable suite aux problèmes de fluage et de viscosité du compound et de température de polymérisation dans le moule, qui constituent les causes essentielles de l'incompatibilité entre le procédé SMC sandwich et le gel-coatage des pièces moulées.

Le but de l'invention consiste à vaincre ces préjugés, et à élaborer un procédé de fabrication de pièces moulées monocoques ou sandwich, recouvertes par un revêtement de gel-coat de coloration stable et uniforme.

Le procédé selon l'invention, consiste:
- à utiliser un gel-coat à base de résine polyester insaturée, et à déposer le revêtement de gel-coat sur une partie du moule préalablement chauffé,
- puis, au bout d'un temps de semi- polymérisation inférieur à 2 minutes, à déposer sur le revêtement de gel-coat mi-polymérisé, une première feuille composite de moulage LPMC préalablement prédécoupée et comprenant un renfort de fibres de verre coupées et préimpregnées par une pâte d'imprégnation à base de résine thermodurcissable, notamment de polyester insaturé, ladite résine se trouvant, avant incorporation de la feuille dans un état pâteux ayant une viscosité supérieure à 400000 Poises à une température ambiante , et renfermant différentes charges et agents d'épaississement adaptés à un mûrissement physique,
- puis à fermer le moule en procédant à une opération de compression à chaud à des pressions comprises entre 5 et 10 bars, au cours de laquelle intervient la fusion de la résine de la feuille composite correspondant à l'état liquide pour une viscosité inférieure à 300 Poises au voisinage d'une température de fusion de 90°C,
- et, après la fin de la phase de polymérisation s'effectuant au voisinage de 130°C pour les deux résines constitutives du revêtement de gel-coat et de la feuille , à ouvrir le moule pour démouler la pièce moulée, peinte sur au moins une de ses faces, le matériau de gel-coat étant apte à polymériser à la température et pendant le délai de polymérisation de la feuille composite de LPMC..

Selon une caractéristique de l'invention, la résine polyester insaturée de revêtement de gel-coat renferme en plus un prépolymère DAP à base de phtalate de polydiallyl.

Le choix d'un tel gel-coat autorise une température de polymérisation de 130°C, pendant un temps parfaitement compatible avec la polymérisation de la feuille composite LPMC.

Le problème de fluage lors de la compression à chaud dans le moule est résolu par le prédécoupage de la feuille composite de LPMC, laquelle occupe sensiblement la surface de l'empreinte du moule. La couche de gel-coat mi-polymérisée reste alors intacte.

Selon une autre caractéristique, un deuxième revêtement de gel-coat de même composition que le premier revêtement, peut être appliqué sur la partie conjuguée du moule pour obtenir après compression, une pièce moulée peinte sur les deux faces opposées.

La mise en oeuvre du/des revêtement(s) de gel-coat dans le moule peut intervenir de différentes manières, notamment au moyen d'un pistolet à compresseur ou par poudrage électrostatique. Dans ce dernier cas, le moule métallique est connecté avantageusement à la terre pour obtenir une répartition homogène de la poudre.

La coloration spécifique de la pièce moulée est obtenue en incorporant des agents de pigmentation dans la résine de revêtement de gel-coat.

Selon un développement de l'invention relatif à des moulages de pièces sandwich, le procédé consiste:
- à appliquer un noyau de mousse sur la première feuille composite de LPMC, la mousse dudit noyau ayant une structure à cellules fermées et creuses, susceptible de subir un écrasement prédéterminé au cours du moulage,
- à poser ensuite une deuxième feuille composite de LPMC sur le noyau de mousse, le matériau de la deuxième feuille de LPMC étant identique à celui de la première feuille,
- et à opérer la phase de compression à chaud pour obtenir une pièce sandwich avec un noyau à mousse, et revêtue de gel-coat sur au moins une des deux faces opposées.

L'usage d'un noyau de mousse à cellules fermées et creuses, résout le problème des bulles d'air lors du moulage, sans nécessiter une augmentation de la pression. Une telle structure évite tout délaminage des feuilles de LPMC sur la mousse, et permet d'obtenir une coloration extérieure parfaite.

L'invention s'applique également à toutes pièces plastiques moulées obtenues selon le procédé de fabrication décrit.

D'autres avantages et caractéristiques ressortiront plus clairement de la description qui va suivre du procédé selon l'invention illustrée à titre d'exemple non limitatif sur le dessin annexé, dans lequel:
- la figure 1 est une vue schématique en coupe du moule à compression pour la mise en oeuvre du gel-coatage sur une pièce moulée monocoque,
- la figure 2 montre une vue à échelle agrandie de la pièce monocoque obtenue après démoulage du moule de la figure 1, la pièce étant peinte sur un côté;
- la figure 3 est une vue identique de la figure 2, avec la pièce peinte sur les deux côtés;
- la figure 4 est une vue identique de la figure 1, en illustrant un développement du procédé pour le gel-coatage d'une pièce sandwich à base de mousse;
- la figure 5 représente une vue à échelle agrandie de la pièce sandwich obtenue après démoulage du moule de la figure 4.

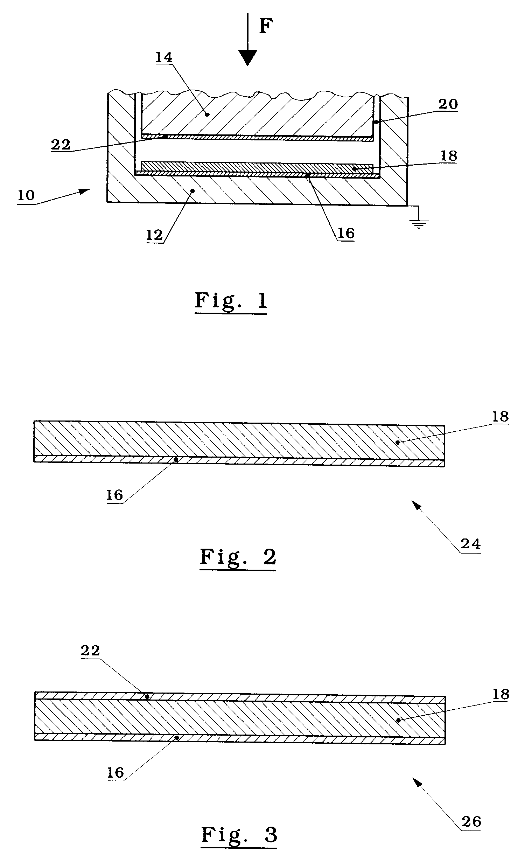

En référence à la figure 1, le procédé de gel-coatage est opéré par projection électrostatique d'une poudre à l'intérieur d'un moule 10 de compression, chauffé préalablement à une température prédéterminée. Le moule 10 en matériau métallique, notamment en acier, en nickel, ou en aluminium, comporte une partie inférieure agencée en matrice 12, et une partie supérieure jouant le rôle de poinçon 14 mobile en translation dans le sens de la flèche F.

La peinture est constituée par une poudre à base de résine polyester thermodurcissable, appliquée sur le fond de la matrice 12 grâce à un pistolet électrostatique. La mise à la terre du moule 10 permet d'obtenir une répartition homogène de la poudre sur le fond. Sous l'influence de la température, la poudre de polyester fond sur l'empreinte de la matrice 12, et commence à polymériser, de manière à former un revêtement 16 continu et gélifié de gel-coat, qui se trouve hors poussière au bout de quelques secondes. L'épaisseur de ce revêtement de gel-coat 16 se situe approximativement entre 200 et 600 microns, et le temps de semi-polymérisation est inférieur à 2 minutes..

On dépose ensuite sur le revêtement 16 de gel-coat, une feuille composite de moulage 18, comprenant un renfort de fibres de verre coupées, préimprégnées par une pâte d'imprégnation à base de résine thermodurcissable, notamment du polyester insaturé. La résine se trouve à l'état pâteux et renferme différentes charges minérales spécifiques, par exemple des carbonates de calcium et/ou magnésium, des agents catalyseur et de réticulation, des agents de mûrissement ou d'épaississement pour une viscosité prédéterminée, et des agents de compensation de retrait et de démoulage.

La feuille composite 18 présente une épaisseur uniforme prédéterminée de l'ordre de 1 à 3 mm, et constitue un produit semi-fini qui peut être achetée dans le commerce sous forme de rouleaux, ayant l'appellation LPMC. Lors de la compression à chaud de la feuille composite 18 de LPMC par le poinçon 14, la résine de la feuille 18 devient liquide sous l'influence de la pression et de la température, et polymérise vers une température voisine de 130°C, à une pression comprise entre 5 et 15 bars. L'air chassé au cours du fluage de la résine incorporée dans la feuille composite 18 de LPMC, peut être évacué vers l'extérieur du moule 10 au moyen d'un espace d'échappement 20 de la chambre de compression, ménagée entre le poinçon 14 et les parois latérales opposées de la matrice 12.

La poudre du revêtement de gel-coat 16 est avantageusement formée par une résine polyester insaturée, et un prépolymère DAP à base de phtalate de polydiallyl. Un tel matériau de gel-coat est susceptible de polymériser à une température de 130°C, et pendant un délai compatible avec le temps de polymérisation de la feuille 18 de LPMC.

La feuille composite 18 de LPMC a été préalablement prédécoupée pour occuper sensiblement toute la surface de l'empreinte de la matrice 12, de manière à réduire au minimum le fluage du compound lors de la fermeture du moule 10. Lorsque la résine fond, le déplacement des fibres de verre est minimum lors du remplissage de l'empreinte du moule 10, ce qui évite toute dégradation par arrachement du revêtement 16 de gel-coat mi-polymérisé, lequel reste intacte.

Après polymérisation de la résine polyester du revêtement 16 de gel-coat et de la feuille 18 moulée, le moule 10 peut être ouvert, et l'on obtient une pièce moulée monocoque 24 (figure 2), dont la surface inférieure est recouverte par le revêtement 16 de gel-coat suite au transfert dans le moule 10. Le transfert de gel-coat est facilité par la faible adhérence avec le moule 10, dont la paroi a été préalablement recouverte d'un agent de démoulage. Le délai de polymérisation est compris dans une fourchette de 30 à 120 secondes par millimètre d'épaisseur du matériau.

Au lieu d'obtenir une pièce monocoque peinte sur une seule face, il est possible d'effectuer un gel-coatage sur les deux faces, en prévoyant un autre poudrage électrostatique de résine polyester insaturée sur la face inférieure du poinçon 14 chauffé, formant un deuxième revêtement 22 continu de gel-coat. Cette double opération de poudrage est effectuée sur les deux parties en regard du moule 10 avant la mise en place de la feuille composite 18 de LPMC, et l'on obtient ensuite une pièce moulée 26 (figure 3), peinte sur les deux faces opposées.

La pièce moulée 26 est représentée à titre d'exemple en forme de panneau rectangulaire, mais il est clair que l'invention s'applique à tout autre forme plane ou gauche selon la configuration de l'empreinte du moule 10.

Différents pigments peuvent être rajoutés dans la résine polyester du gel-coat en fonction de la coloration souhaitée. Il est facile de changer la couleur après fabrication de quelques dizaines de pièces 24 ou 26.

Dans le cas d'une feuille composite 18 de LPMC, le mûrissement est physique et non chimique. Le mélange résine, durcisseur et catalyseur est soumis à un durcissement directement après sa production, en formant une structure de cristaux de faibles dimensions, qui reste stable pendant une durée assez longue (trois mois environ).

Cette structure de petits cristaux donne une consistance pâteuse au matériau. Lors de l'opération de moulage, le dépassement d'un seuil de température, produit un changement de phase de la feuille 18 de LPMC, qui devient liquide pour une température prédéterminée voisine de 80°C à 90°C. Dans sa phase liquide, la viscosité du LPMC est très faible ( inférieure à 300 Poises à 90°C), d'où la faible pression nécessaire afin d'assurer le remplissage de la cavité du moule 10.

Étant donné que le frottement entre l'écoulement de LPMC liquide, et le revêtement de gel-coat mi-polymérisé est proportionnel à la pression dans le moule 10, l'usage de la faible pression nécessaire pour le moulage du matériau composite LPMC est donc particulièrement avantageux pour l'application du revêtement de gel-coat. L'effet de frottement est alors minimum grâce à l'effet de combinaison de la faible pression et de la réduction du fluage suite au découpage de la feuille de LPMC.

Le matériau LPMC à mûrissement physique utilisé pour la feuille composite 18 présente une viscosité supérieure à 400000 Poises à une température ambiante de 20°C correspondant à l'état pâteux, et une viscosité inférieure à 300 Poises au voisinage d'une température de 90°C correspondant à l'état liquide après le changement de phase.

La résistance mécanique de la pièce moulée peut être augmentée en incorporant un tissu de renfort supplémentaire, notamment de fibres de verre, ou à base de carbone, entre la première feuille 18 de LPMC, et la matrice 12 ou le poinçon 14.

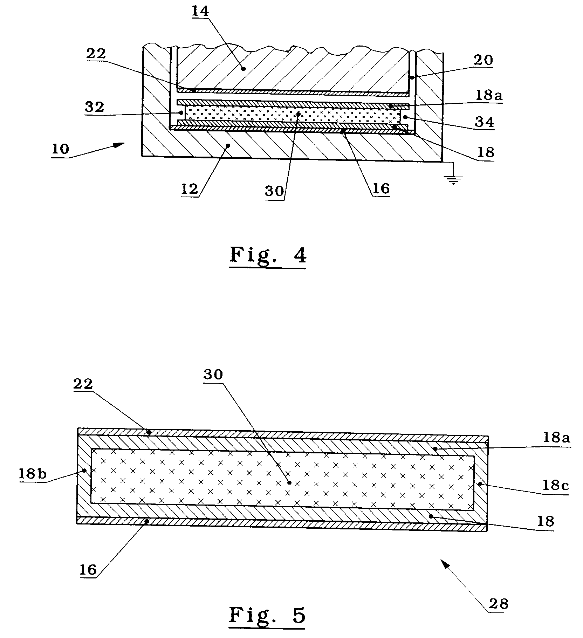

Un développement de l'invention représenté aux figures 4 et 5, concerne la fabrication en une seule opération , d'une pièce sandwich 28 revêtue sur les deux faces extérieures d'un revêtement de gel-coat.

Le moule 10 est d'abord soumis à un chauffage préalable d'une température voisine de 130°C, suivi d'un poudrage électrostatique de résine polyester insaturée sur les parties conjuguées de la matrice 12 et du poinçon 14. La polymérisation de la résine entraîne ensuite la formation des deux revêtements 16,22 de gel-coat, comme dans le cas du procédé de la figure 1. Une première feuille composite 18 de matériau LPMC est placée dans le moule 10 au-dessus du revêtement inférieur 16 de gel-coat, de manière à recouvrir la surface horizontale de l'empreinte.

Une âme ou noyau de mousse 30, en forme de plaque rectangulaire, est ensuite posée sur la première feuille 18 de LPMC, les dimensions coplanaires de l'âme 30 étant légèrement inférieures à celles de la première feuille composite 18. La densité de la mousse est comprise entre 50 et 300 Kg/m3 en fonction de la résistance mécanique souhaitée, et la structure de la mousse 30 est composée essentiellement de cellules fermées et creuses autorisant un écrasement prédéterminé au cours du moulage.

En général, toutes les sortes de mousses supportant une température de 130°C, notamment PVC, PMI, ou PU, sont applicables au procédé de la figure 4, I'écrasement recommandé étant voisin de 10% de l'épaisseur nominale de la plaque de mousse. L'écrasement peut être avantageusement ajusté, soit par variation de la pression de moulage, soit par l'insertion de cales de réglage entre les bords de la matrice 12 et du poinçon 14.

Une deuxième feuille composite 18a de LPMC, ayant une structure identique à la première, est ensuite posée sur l'âme centrale en mousse 30, suivi de la fermeture du moule 10. La compression à chaud provoque l'abaissement de la viscosité de la résine polyester. L'effet de la pression entraîne l'écoulement de la résine polyester qui flue en remplissant l'espace libre, notamment sur les flancs latéraux 32,34 de la cavité du moule 10, de manière à encapsuler le noyau de mousse 30. Sous l'action de la pression hydraulique, la résine provoque l'écrasement des cellules fermées de la mousse 30, et l'air emprisonné lors de la fermeture du moule 10 (quelques mm3 d'air par m2 de l'empreinte), est poussé d'une manière homogène dans les deux couches de surface de la mousse 30, pour être incorporé dans un taux très faible de cellules de surface. Il en résulte l'absence totale de bulles d'air macroscopiques risquant de provoquer, soit un délaminage des peaux 18,18a de LPMC sur la mousse 30, soit une dégradation de l'aspect extérieur de la pièce 28.

Après l'écrasement des cellules fermées de la mousse 30, la résine polymérise vers 130°C, et la pièce sandwich 28 peut être démoulée après quelques minutes, avec un revêtement de gel-coat sur les deux faces opposées, obtenu durant la même opération de moulage.

L'adhérence par polymérisation entre la mousse 30 et la résine du matériau LPMC peut d'autre part être renforcée en prévoyant au niveau de la mousse 30, une surface superficielle à base de cellules écrasées ou coupées, qui augmente le coefficient d'ancrage entre les couches.

La résistance mécanique de la pièce sandwich peut également être augmentée en incorporant un tissu de renfort supplémentaire, notamment de fibres de verre, ou de carbone, entre la mousse 30, et chaque feuille composite 18,18a de LPMC.

La structure de la mousse 30 reste stable durant l'opération de moulage, et la fabrication de la pièce sandwich 28 est parfaitement compatible avec l'opération de gel-coatage en poudre dans le moule 10, à la température de 130°C.

Il est évident que la nature spécifique de la résine polyester insaturée des feuilles composite de LPMC, et du poudrage électrostatique, peut être remplacée par une résine équivalente.

Le tissu de renfort supplémentaire, au lieu d'être réalisé en un matériau à base minérale, peut également comporter une structure métallique, pour procurer à la pièce moulée une fonction de blindage électromagnétique.

## Revendications

**1-** Procédé de fabrication d'une pièce moulée réalisée en un matériau à base de résine thermodurcissable et recouverte par un revêtement de gel-coat sur au moins une de ses faces, ledit procédé étant élaboré dans un moule de compression à chaud, et caractérisé par les étapes suivantes, consistant:
- à utiliser un gel-coat à base de résine polyester insaturée, et à déposer le revêtement de gel-coat (16) sur une partie du moule (10) préalablement chauffé,
- puis, au bout d'un temps de semi-polymérisation inférieur à 2 minutes, à déposer sur le revêtement de gel-coat (16) mi-polymérisé, une première feuille composite de moulage (18) LPMC, préalablement prédécoupée et comprenant un renfort de fibres de verre coupées et préimprégnées par une pâte d'imprégnation à base de résine thermodurcissable, notamment de polyester insaturé, ladite résine se trouvant, avant incorporation de la feuille (18), dans un état pâteux ayant une viscosité supérieure à 400000 Poises à une température ambiante, et renfermant différentes charges et agents d'épaississement adaptés à un mûrissement physique,
- puis, à fermer le moule (10) en procédant à une opération de compression à chaud à des pressions comprises entre 5 et 10 bars, au cours de laquelle intervient la fusion de la résine de la feuille composite (18), correspondant à l'état liquide pour une viscosité inférieure à 300 Poises au voisinage d'une température de fusion de 90°C,
- et, après la fin de phase de polymérisation s'effectuant au voisinage de 130°C pour les deux résines constitutives du revêtement de gel-coat (16) et de la feuille (18), à ouvrir le moule (10) pour démouler la pièce (24) moulée, peinte sur au moins une de ses faces, le matériau du revêtement de gel-coat étant apte à polymériser à la température et pendant le délai de polymérisation de la feuille composite (18) de LPMC.

**2-** Procédé de fabrication selon la revendication 1 caractérisé en ce que la première feuille composite (18) de LPMC est prédécoupée pour occuper sensiblement la surface de l'empreinte du moule (10), de manière à limiter le fluage du matériau compound LPMC lors de la compression à chaud, et que le délai de polymérisation est compris dans une fourchette de 30 à 120 secondes par millimètre d'épaisseur de matériau.

**3-** Procédé de fabrication selon la revendication 1, caractérisé en ce que la résine polyester insaturée du revêtement de gel-coat (16) renferme en plus un prépolymère DAP à base de phtalate de polydiallyl.

**4-** Procédé de fabrication selon la revendication 1 ou 2, caractérisé en ce qu'un deuxième revêtement de gel-coat (22), de même composition que le premier revêtement (16), est appliqué sur la partie conjuguée du moule (10), pour obtenir après compression, une pièce (26,28), moulée, peinte sur les deux faces opposées.

**5-** Procédé de fabrication selon l'une des revendications 1 à 4, caractérisé en ce que le revêtement de gel-coat (16), (22) est appliqué dans le moule (10) par poudrage électrostatique, le moule (10) étant mis à la terre pour obtenir une répartition homogène de la poudre, et que des agents de pigmentation sont incorporés dans la résine du revêtement de gel-coat (16,22) pour obtenir une coloration prédéterminée de la pièce moulée (24,26,28).

**6-** Procédé de fabrication selon l'une des revendications 1 à 5, caractérisé en ce qu'on incorpore dans la pièce, un tissu de renfort supplémentaire entre la première feuille composite (18) et le moule (10), ledit tissu étant réalisé en une structure, soit à base minérale, notamment de fibres de verre, ou de carbone, pour augmenter la résistance mécanique de la pièce moulée, soit métallique pour conférer à la pièce moulée (24,26) une fonction de blindage électromagnétique.

**7-** Procédé de fabrication selon l'une des revendications 1 à 6, caractérisé par les étapes additionnelles, consistant:
- à appliquer un noyau de mousse (30) sur la première feuille composite (18) de LPMC, la mousse (30) dudit noyau ayant une structure à cellules fermées et creuses, susceptible de subir un écrasement prédéterminé au cours du moulage,
- à poser ensuite une deuxième feuille composite (18a) de LPMC sur le noyau de mousse (30), le matériau de la deuxième feuille (18a) de LPMC étant identique à celui de la première feuille (18),
- et à opérer la phase de compression à chaud pour obtenir une pièce sandwich (28) avec un noyau à mousse, et revêtue de gel-coat sur au moins une des deux faces opposées.

**8-** Procédé de fabrication selon la revendication 7 caractérisé en ce que la densité de la mousse (30) est comprise entre 50 et 300 Kg/m3, en autorisant un écrasement voisin de 10% de l'épaisseur nominale du noyau.

**9-** Procédé de fabrication selon la revendication 7 ou 8, caractérisé en ce que:
- on ménage des cellules écrasées ou coupées sur la face superficielle du noyau de mousse (30) afin d'augmenter l'ancrage avec les feuilles (18,18a) de LPMC,
- et on incorpore un tissu de renfort supplémentaire entre la mousse 30 et chaque feuille (18,18a) de LPMC, ledit tissu étant réalisé en un matériau, soit à base minérale, notamment de carbone ou de fibres de verre pour renforcer la résistance mécanique de la pièce sandwich (28), soit métallique pour conférer à la pièce sandwich (28) une fonction de blindage électromagnétique.

**10-** Pièce en matériau plastique moulée, obtenue selon le procédé de l'une des revendications 1 à 9.
